(19) Europäisches Patentamt
European Patent Office
Office européen des brevets

(11) EP 2 717 116 A1

(12) EUROPEAN PATENT APPLICATION
published in accordance with Art. 153(4) EPC

(43) Date of publication:
09.04.2014 Bulletin 2014/15

(51) Int Cl.:
G06F 3/01 (2006.01)     G06F 3/033 (2013.01)
G06F 3/048 (2013.01)

(21) Application number: 12792819.0

(22) Date of filing: 25.05.2012

(86) International application number:
PCT/JP2012/063463

(87) International publication number:
WO 2012/165325 (06.12.2012 Gazette 2012/49)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 27.05.2011 JP 2011118733

(71) Applicant: NEC CASIO Mobile Communications,
Ltd.
Kawasaki-shi, Kanagawa 211-8666 (JP)

(72) Inventor: KUROSAWA, Yusuke
Kawasaki-shi
Kanagawa 211-8666 (JP)

(74) Representative: Vossius & Partner
Siebertstrasse 4
81675 München (DE)

(54) **ELECTRONIC DEVICE, CONTROL METHOD THEREOF, AND PROGRAM**

(57) An electronic apparatus includes an operation unit that receives a user operation, input assistance means used when a user inputs information to the operation unit and that can change a user's sensory perception, and a control unit that, in response to an operation performed by a user using the input assistance means, guides a user operation to a prescribed operation by changing a sensory perception given to the user by the input assistance means.

FIG. 1

300: ELECTRONIC APPARATUS

**Description**

TECHNICAL FIELD

(CROSS-REFERENCE TO RELATED APPLICATIONS)

The present application claims priority from Japanese Patent Application No. JP2011-118733 (filed on May 27, 2011) the content of which is hereby incorporated in its entirety by reference into this specification.

The present invention relates to an electronic apparatus, a control method thereof and a program. In particular, the invention relates to an electronic apparatus provided with input assistance means, a control method thereof, and a program.

BACKGROUND

An electronic apparatus such as a mobile telephone, a PHS (Personal Handyphone System), a PDA (Personal Digital Assistant), a game console or a notebook PC (Personal Computer) is often provided with input means such as a touch panel, in addition to hardware keys or a keyboard. In particular, this is due to the fact that in recent years many electronic apparatuses have a high resolution display screen so that intuitive operation is enabled by combining an icon display and a touch panel.

Also, an electronic apparatus in recent years may be provided with an input assistance means. The input assistance means may have a stylus to perform handwritten input of text or symbols by pressing a tip thereof against a touch panel or the like.

Here, Patent Literature 1 and 2 disclose technology that provides feedback of a user operation to a stylus and improves operation sense when the stylus is used.

CITATION LIST

PATENT LITERATURE

> [Patent Literature 1]
> Japanese Patent Kokai Publication No. JP2008-257748A
> [Patent Literature 2]
> Japanese Patent Kokai Publication No. JP2005-317006A

SUMMARY

TECHNICAL PROBLEM

It is to be noted that disclosures of each of the prior art literatures described above are incorporated by reference into the present document. The following analysis is given from a viewpoint of the present invention.

Input of handwritten text or the like is possible by operation of an electronic apparatus using an input assistance means such as a stylus or the like. However, operations using a stylus are not limited to handwritten input. An electronic apparatus may be operated also using a stylus instead of a finger.

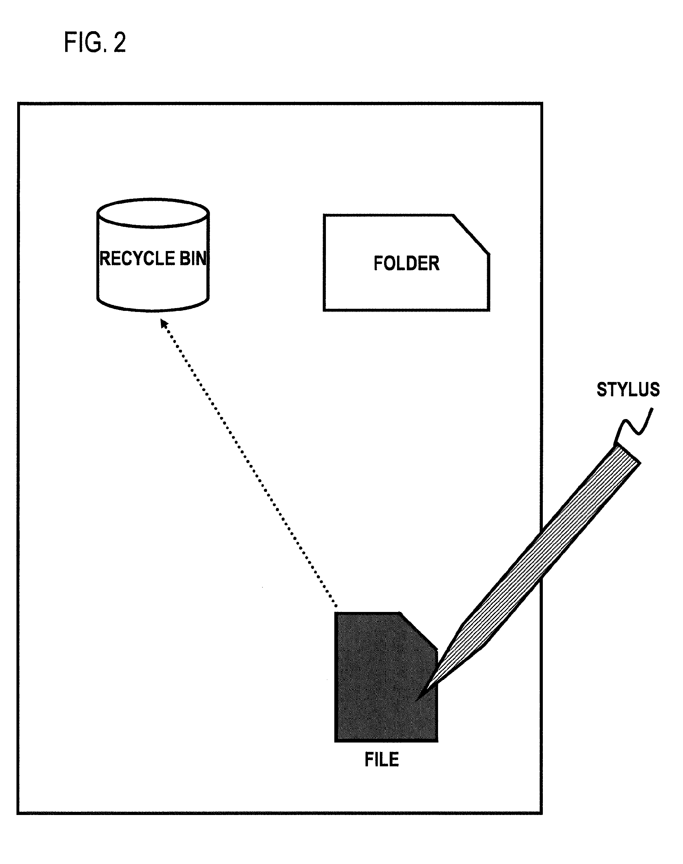

In a case of an operation such as file deletion after performing handwritten input using a stylus, it may be supposed that the file operation is performed using the grasped stylus. In this way, touch panel operations using the stylus instead of a finger may be performed. Such operations include a moving operation (a drag operation) with the stylus in contact with the touch panel in a state where a file or the like is selected. For example, in an operation screen shown in Fig. 2, the operation in question is one where a file is selected using the stylus and the file is moved as it is, to a trash box.

If the operation shown in Fig. 2 as described above is performed using the stylus, resistance (friction) between the touch panel and stylus may be low and the amount of movement of the stylus may become larger than envisaged by the user. That is, when a drag operation is performed, the movement may go beyond a target point. Or, the resistance between the touch panel and stylus may be low, and it may not be possible to move the shortest distance between a file and a target point (for example, the trash box in Fig. 2).

As described above, due to the resistance between the touch panel and the stylus being low or the like, the user may not be able to operate the stylus as intended. Thus there is a problem to be solved in operation of an electronic apparatus using an input assistance means (stylus). Accordingly, an electronic apparatus that improves operability when operating using the input assistance means, a control method thereof, and a program are desired.

SOLUTION TO PROBLEM

According to a first aspect of the present invention there is provided an electronic apparatus that includes: an operation unit that receives a user operation; input assistance means used when a user inputs information to the operation unit and that can change a user's sensory perception; and a control unit that, in response to an operation performed by a user using the input assistance means, guides a user operation to a prescribed operation by changing a sensory perception given to the user by the input assistance means.

According to a second aspect of the present invention there is provided a control method of an electronic apparatus including an operation unit that receives a user operation, and input assistance means used when a user inputs information to the operation unit, the method including: a step of detecting an operation performed by a user using the input assistance means, and a step of guiding, in response to an operation performed by a user, a user operation to a prescribed operation by changing a sensory perception given to the user by the input assistance means.

The present method is associated with a specific apparatus, known as an electronic apparatus, which is provided with an operation unit that receives a user operation and input assistance means that is used when a user inputs information to the operation unit.

According to a third aspect of the present invention there is provided a program for a computer configured to control an electronic apparatus that includes an operation unit that receives a user operation and input assistance means that is used when a user inputs information to the operation unit: a process of detecting an operation performed by a user using the input assistance means, and a process of guiding, in response to an operation performed by a user, a user operation to a prescribed operation by changing a sensory perception given to the user by the input assistance means.

It is to be noted that the program may be recorded on a computer readable storage medium. The storage medium may be a non-transient medium such as a semiconductor memory, a hard disk, a magnetic recording medium, an optical recording medium, or the like. The present invention may be embodied as a computer program product.

ADVANTAGEOUS EFFECTS OF INVENTION

According to the respective aspects of the present invention there are provided: an electronic apparatus that improves operability when operated using input assistance means, a control method thereof, and a program.

BRIEF DESCRIPTION OF THE DRAWINGS

FIG. 1 is a diagram for describing an outline of an exemplary embodiment.
FIG. 2 is a diagram for describing an example of an operation using a stylus.
FIG. 3 is a diagram showing an example of an external view of an electronic apparatus according to a first exemplary embodiment.
FIG. 4 is a diagram showing an example of an internal configuration of the electronic apparatus main body shown in Fig. 3.
FIG. 5 is a diagram showing an example of an internal configuration of a stylus shown in Fig. 3.
FIG. 6 is a flowchart showing an example of actions of an electronic apparatus when operating using a stylus.
FIG. 7 is a diagram showing an example of a movement assistance line.
FIG. 8 is a diagram showing an example of an internal configuration of a stylus according to a second exemplary embodiment.

DESCRIPTION OF EMBODIMENTS

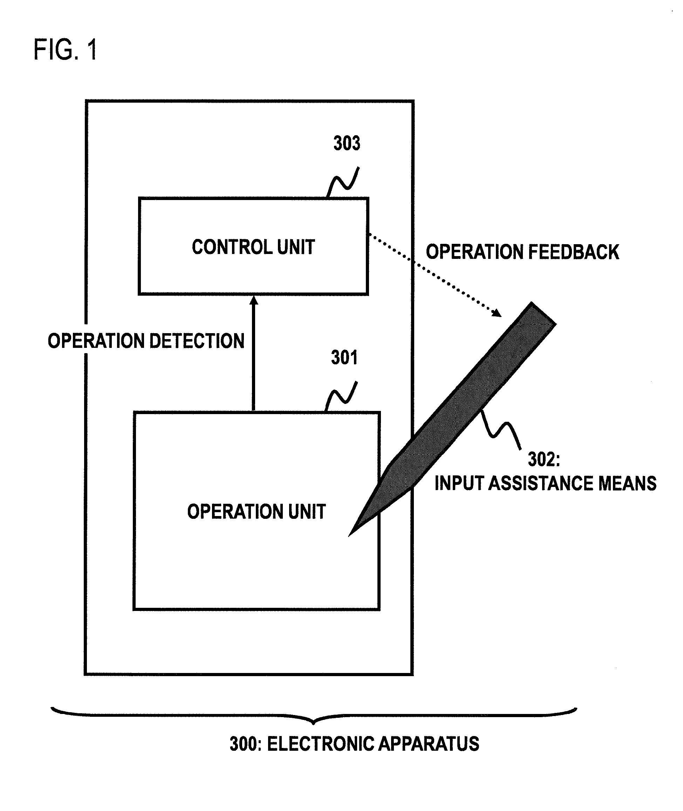

First a description is given of an outline of an exemplary embodiment using Fig. 1. It is to be noted that reference symbols in the drawings attached to this outline are added to respective elements for convenience, as an example in order to aid understanding, and are not intended to limit the invention to modes shown in the drawings.

As described above, when an electronic apparatus is operated using input assistance means (stylus), due to resistance between a touch panel and the stylus being low or the like, the user may not be able to operate the stylus as intended. As a result, an electronic apparatus that improves operability when operating using the stylus is desired.

Accordingly, as an example an electronic apparatus 300 as shown in Fig. 1 is provided. The electronic apparatus 300 shown in Fig. 1 is provided with an operation unit 301 that receives a user operation, input assistance means 302 that is used when a user inputs information to the operation unit 301 and that can change a sensory perception felt by a user, and a control unit 303 that, in response to an operation performed by a user using the input assistance means 302, guides a user operation to a prescribed operation by changing the sensory perception given to the user by the input assistance means 302.

When the user inputs information to the operation unit 301 using the input assistance means 302, it may be possible to infer an action that the user will probably perform next from the inputted information. Then, if the action can be inferred, a position (below, called an operation point) to which the user will probably move the input assistance means 302 next can be assumed. In a case where the user does not operate the input assistance means 302 in the direction of the assumed operation point, the user operation is guided by changing the sensory perception received by the user from the input assistance means 302. That is, in a case where the user operation is not directed towards the operation point, the sensory perception given to the user by the input assistance means 302 is changed to a direction inhibiting the user operation. On the other hand, in a case where the user operation is directed towards the operation point, the sensory perception given to the user is changed to a direction facilitating the user operation. It is to be noted that, for the sensory perception felt by the user, frictional resistance generated between the touch panel and the stylus or vibration of the stylus itself can be envisaged. In this way, by performing feedback of an operation performed by the user to the input assistance means 302 and changing the sensory perception felt by the user, the operability of the electronic apparatus is improved.

In addition, modes described below are possible.

[Mode 1]

As in the electronic apparatus according to a first aspect described above.

[Mode 2]

The control unit preferably calculates a movement assistance line to guide a user operation, from a first operation point at which the operation unit receives a user operation and a second operation point at which the user is assumed to perform an operation next based on the first operation point, and in a case where the user operation deviates from the movement assistance line, strengthens a sensory perception given to the user by the input assistance means.

[Mode 3]

The control unit and the input assistance means can preferably exchange data in a wired or wireless manner.

[Mode 4]

The input assistance means preferably changes a sensory perception felt by the user by changing frictional resistance of a portion in contact with the operation unit.

[Mode 5]

The input assistance means preferably changes a sensory perception felt by the user by vibrating a housing of the input assistance means.

[Mode 6] The operation unit preferably receives a user operation from a touch panel, and the input assistance means is preferably a stylus.

[Mode 7]

As in a control method of the electronic apparatus according to a second aspect described above.

[Mode 8]

A step of guiding to the prescribed operation preferably calculates a movement assistance line to guide a user operation, from a first operation point at which the operation unit receives a user operation and a second operation point at which the user is assumed to perform an operation next based on the first operation point, and in a case where the user operation deviates from the movement assistance line, strengthens a sensory perception given to the user by the input assistance means.

[Mode 9]

As in a program according to a third aspect described above.

[Mode 10] A process of guiding to the prescribed operation preferably calculates a movement assistance line to guide a user operation, from a first operation point at which the operation unit receives a user operation and a second operation point at which the user is assumed to perform an operation next based on the first operation point, and in a case where the user operation deviates from the movement assistance line, strengthens a sensory perception given to the user by the input assistance means.

(First Exemplary Embodiment )

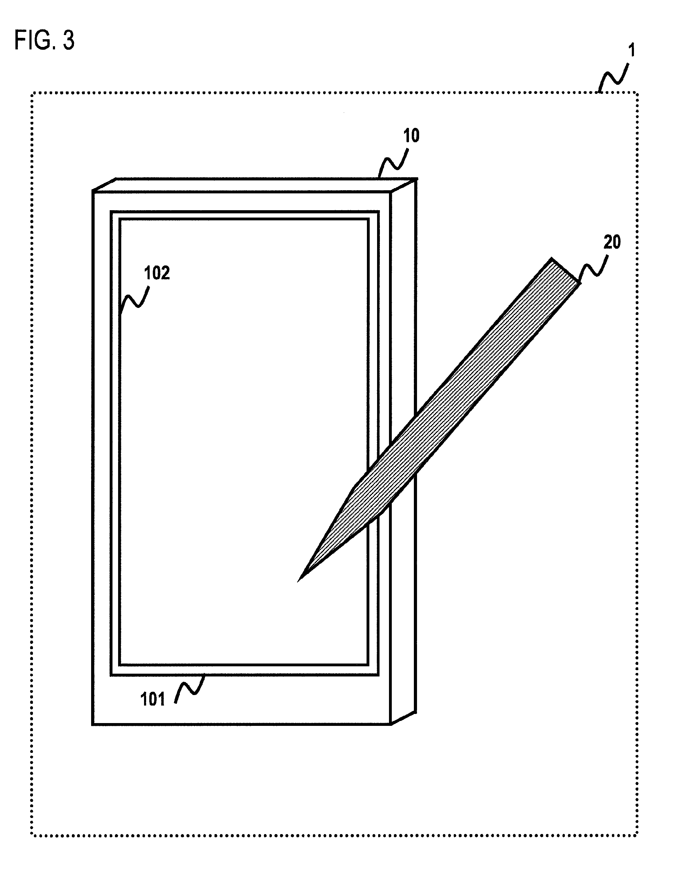

Next, a detailed description is given concerning a first exemplary embodiment, making use of the drawings. Fig. 3 is a diagram showing an example of an external view of an electronic apparatus 1 according to the present exemplary embodiment. The electronic apparatus 1 is configured from an electronic apparatus main body 10 and a stylus 20. The electronic apparatus main body 10 and the stylus 20 can exchange data in a wired or wireless manner. In the present exemplary embodiment a description is given where both perform communication wirelessly. The electronic apparatus main body 10 is provided with a display unit 101 and a touch panel 102, displays information necessary for a user operation in the display unit 101, and receives a user operation from the touch panel 102.

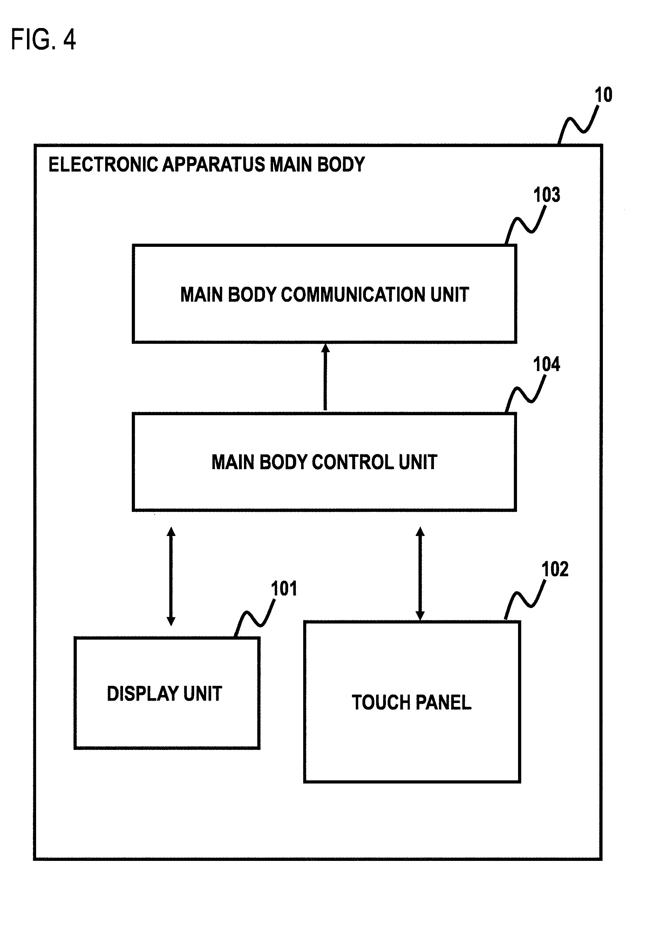

Fig. 4 is a diagram showing an example of an internal configuration of the electronic apparatus main body 10. The electronic apparatus main body 10 is configured from the display unit 101, the touch panel 102, a main body communication unit 103, and a main body control unit 104. The display unit 101 and the touch panel 102 are as described above, and a description thereof is omitted.

The electronic apparatus main body 10 uses the main body communication unit 103 to perform wireless communication with the stylus 20. The main body control unit 104 controls the respective units of the display unit 101, the touch panel 102 and the main body communication unit 103.

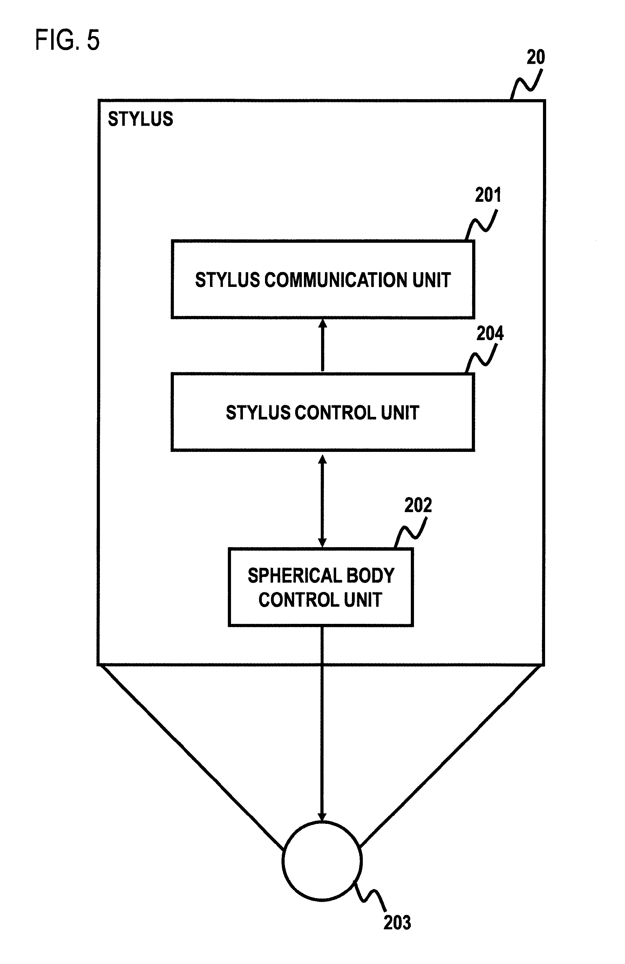

Fig. 5 is a diagram showing an example of an internal configuration of the stylus 20. The stylus 20 is configured from a stylus communication unit 201, a spherical body control unit 202, a spherical body unit 203, and a stylus control unit 204.

Wireless communication between the stylus 20 and the electronic apparatus main body 10 is realized by the stylus communication unit 201. The spherical body control unit 202 controls rotation of the spherical body unit 203 provided at the tip of the stylus 20 (control is by braking strength). By controlling rotation of the spherical body unit 203, the spherical body control unit 202 changes frictional resistance when the touch panel 102 and the stylus 20 are put in contact. Changing the frictional resistance when the touch panel 102 and the stylus 20 are put in contact changes a sensory perception felt by the user from the stylus 20.

The stylus control unit 204 receives an instruction from the electronic apparatus main body 10 via the stylus communication unit 201, and gives an instruction to the spherical body control unit 202 in accordance with the instruction from the electronic apparatus main body 10. More specifically, when the stylus control unit 204 receives an instruction to increase frictional resistance felt by the user from the main body control unit 104 via the stylus communication unit 201, the stylus control unit 204 gives an instruction to strengthen braking with respect to the spherical body unit 203, to the spherical body control unit 202. On the other hand, on receiving an instruction to lower frictional resistance felt by the user, the stylus control unit 204 gives an instruction to weaken braking with respect to the spherical body unit 203, to the spherical body control unit 202.

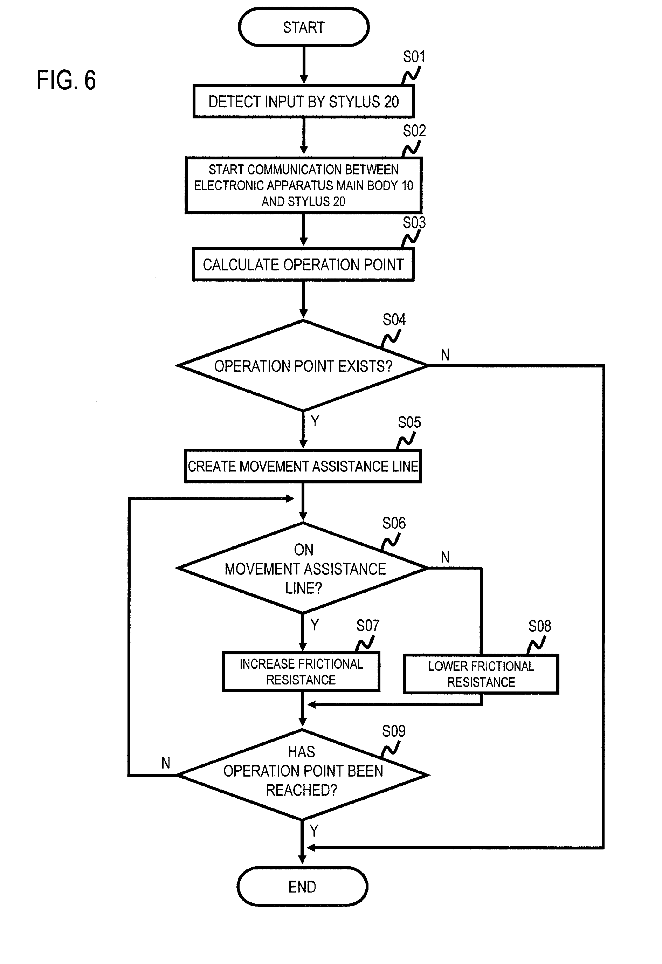

Next, a description is given concerning actions of the electronic apparatus 1 when the user performs an operation using the stylus 20. Fig. 6 is a flowchart showing an example of actions of the electronic apparatus 1 when the user performs an operation using the stylus 20.

In step S01, the main body control unit 104 detects that an operation by the stylus 20 has been performed with respect to the touch panel 102.

In step S02, notification is given that an operation using the stylus 20 has been performed to the stylus communication unit 201 from the main body communication unit 103.

In step S03, a calculation is performed of an operation point that is assumed with respect to an operation to be performed next by the user. For example, in a case of selecting a file as shown in Fig. 2, an action such as moving the file to a trash box (deleting the file), moving the file to a folder, or opening the file is inferred as an action to be performed next by the user. In a case of moving the file to the trash box or a folder, since it is necessary to drag the file, the location of the trash box or folder is calculated as an operation point.

In step S04, the main body control unit 104 determines whether or not an operation point exists. If an operation point exists, processing moves to step S05. If an operation point does not exist, processing is ended. It is to be noted that selection of a file in the lowermost folder or the like can be envisaged as a case where an operation point does not exist.

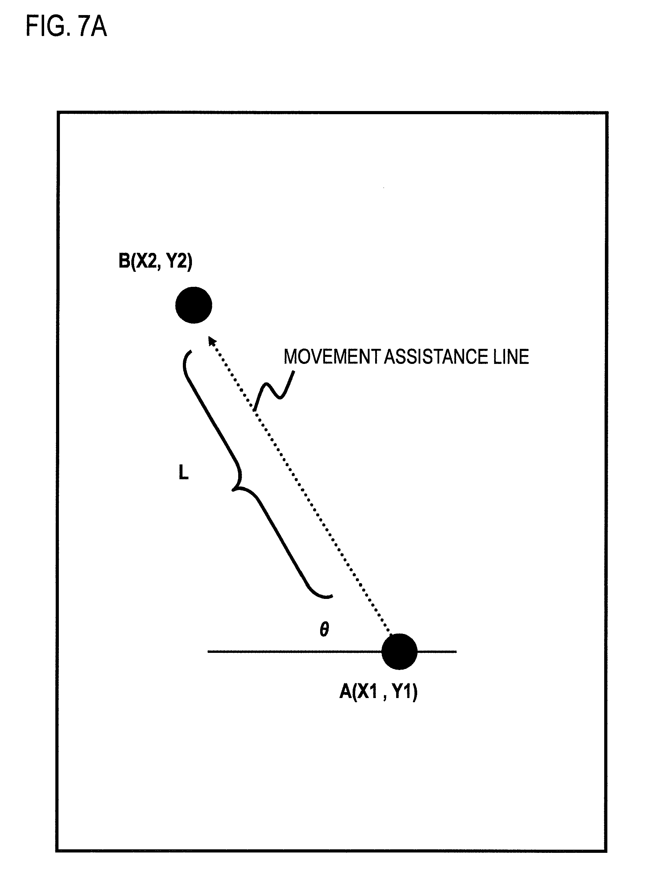

In step S05, the main body control unit 104 calculates a movement assistance line. Fig. 7 is a diagram showing an example of the movement assistance line. In Fig. 7, point A (X1, Y1) is a point at which the user presses the touch panel 102 by the stylus 20, and point B (X2, Y2) is an operation point. A straight line joining point A and point B is the movement assistance line. The movement assistance line is calculated by the following expressions (1) and (2):

$$\theta = \arctan\left(\frac{Y2 - Y1}{X2 - X1}\right) \quad \cdots (1)$$

$$L = \sqrt{(X2 - X1)^2 + (Y2 - Y1)^2} \quad \cdots (2)$$

Note that theta is movement angle, and L is movement distance.

In step S06, the main body control unit 104 determines whether the user drag operation and the movement assistance line described above overlap. In a case where it is determined that the drag operation and the movement assistance line do not overlap, processing moves to step S07. In a case where it is determined that the drag operation and the movement assistance line overlap, processing moves to step S08.

In step S07, an instruction is given to increase frictional resistance between the touch panel 102 and the stylus 20, to the stylus 20 from the main body control unit 104. The stylus control unit 204 that receives the instruction to increase the frictional resistance gives an instruction to increase the frictional resistance between the touch panel 102 and the spherical body unit 203, to the spherical body control unit 202. The spherical body control unit 202 controls rotation of the spherical body unit 203 in accordance with the instruction.

In step S08, the frictional resistance when the touch panel 102 and the stylus 20 are put in contact is lowered, in a procedure similar to step S07.

In step S09, a determination is made as to whether or not the stylus 20 has reached an operation point. If the operation point has been reached, processing is ended. If the operation point has not been reached, processing moves to step S06 and processing is continued.

The extent to which the frictional resistance increases may be determined based on divergence between the user's drag action and the movement assistance line. That is, in accordance with divergence from the movement assistance line, the frictional resistance is increased and the user's drag action is guided to the movement assistance line.

As described above, in an operation of the electronic apparatus using a stylus, an operation point to which the stylus will probably be moved is calculated from an action the user is assumed to perform next. In addition, in a case where the movement assistance line is calculated from the operation point and the user's drag action diverges from the movement assistance line, the friction resistance between the touch panel and the stylus is increased. On the other hand, if the user's drag action and the movement assistance line are overlapping, the frictional resistance between the touch panel and the stylus is lowered. As a result, since the user's drag action is performed along the movement assistance line, even if the user operation is rough, it is possible to naturally arrive at the operation point. That is, when the electronic apparatus is operated using the stylus 20, by giving feedback to the user it is possible to improve operability of the electronic apparatus 1.

It is to be noted that in the technology disclosed in Patent Literature 1 and Patent Literature 2, by vibrating the stylus when operating using the stylus, a sensory perception close to actual writing is given to the user (the sense of an operation using a stylus is improved). However, in the technology disclosed in Patent Literature 1 and Patent Literature 3, even if the operation sense of the user is improved, operability is not improved.

(Second Exemplary Embodiment)

Next, a detailed description is given concerning a second exemplary embodiment, making reference to the drawings. It is to be noted that an electronic apparatus main body 10a of an electronic apparatus 1a according to the present exemplary embodiment has a configuration similar to the electronic apparatus main body 10 described in the first exemplary embodiment and a description is omitted.

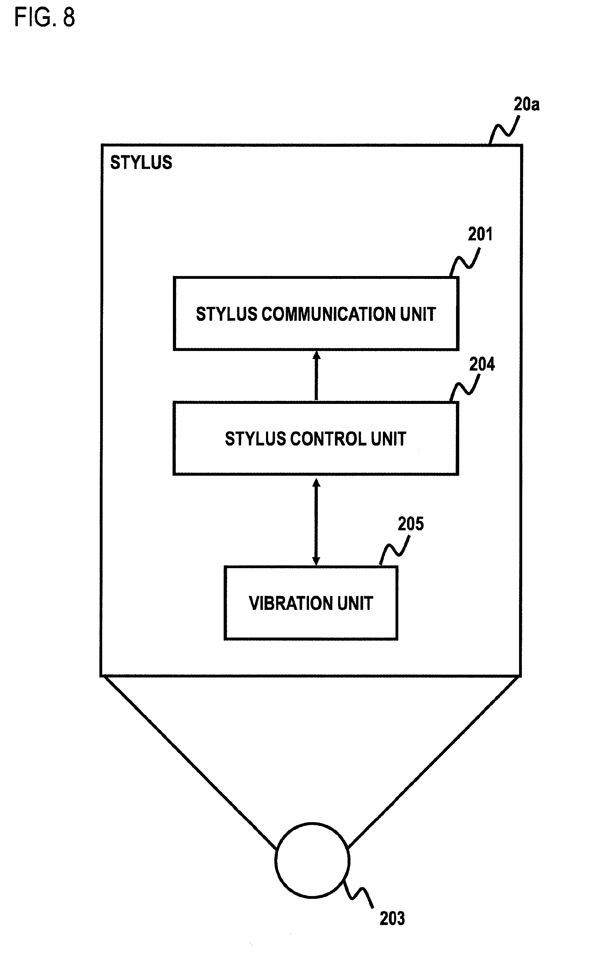

Fig. 8 is a diagram showing an example of an internal configuration of a stylus 20a of the electronic apparatus 1a according to the present exemplary embodiment. In Fig. 8, component elements similar to Fig. 5 are represented by the same reference symbols, and descriptions thereof are omitted. A point of difference between the stylus 20a shown in Fig. 8 and the stylus 20 shown in Fig. 5 is that the spherical body control unit 202 is removed and a vibration unit 205 is newly added.

The vibration unit 205 can receive an instruction from a stylus control unit 204 and give a vibration to the hand of a user grasping the stylus 20a. The vibration unit 205 can use a piezoelectric vibrator.

A point of difference in actions of the stylus 20a and the stylus 20 is that instead of increasing frictional resistance between a touch panel 102 and the stylus 20, vibration is added when a user's drag action deviates from a movement assistance line. In a case where the user's drag action deviates from the movement assistance line, it is possible to guide the drag action to the movement assistance line by providing vibration to the user's hand.

It is to be noted that the respective disclosures of the cited patent literature described above are hereby incorporated by reference into this specification. Modifications and adjustments of exemplary embodiments and examples are possible within the bounds of the entire disclosure (including the scope of the claims) of the present invention, and also based on fundamental technological concepts thereof. Furthermore, multiple combinations and selections of various disclosed elements (including respective elements of the respective claims, respective elements of the respective exemplary embodiments and examples, and respective elements of the respective drawings) are possible within the scope of the claims of the present invention. That is, the present invention clearly includes every type of transformation and modification that a person skilled in the art can realize according to the entire disclosure including the scope of the claims and to technological concepts thereof.

REFERENCE SIGNS LIST

| | |
|---|---|
| 1, 1a, 300 | electronic apparatus |
| 10, 10a | electronic apparatus main body |
| 20, 20a | stylus |
| 101 | display unit |
| 102 | touch panel |
| 103 | main body communication unit |
| 104 | main body control unit |
| 201 | stylus communication unit |
| 202 | spherical body control unit |
| 203 | spherical body unit |
| 204 | stylus control unit |
| 205 | vibration unit |
| 301 | operation unit |
| 302 | input assistance means |
| 303 | control unit |

**Claims**

1. An electronic apparatus, **characterized by** comprising:

   an operation unit that receives a user operation;
   input assistance means used when a user inputs information to said operation unit and that can change a user's sensory perception; and
   a control unit that, in response to an operation performed by a user using said input assistance means, guides a user operation to a prescribed operation by changing a sensory perception given to the user by said input assistance means.

2. The electronic apparatus according to claim 1, wherein said control unit calculates a movement assistance line to guide a user operation, from a first operation point at which said operation unit receives a user operation and a second operation point at which the user is assumed to perform an operation next based on the first operation point, and in a case where the user operation deviates from the movement assistance line, strengthens a sensory perception given to the user by said input assistance means.

3. The electronic apparatus according to claim 1 or 2, wherein said control unit and said input assistance means can exchange data in a wired or wireless manner.

4. The electronic apparatus according to any of claims 1 to 3, wherein said input assistance means changes a sensory perception felt by the user by changing frictional resistance of a portion in contact with said operation unit.

5. The electronic apparatus according to any of claims 1 to 3, wherein said input assistance means changes a sensory perception felt by the user by vibrating a housing of said input assistance means.

6. The electronic apparatus according to any of claims 1 to 5, wherein said operation unit receives a user operation by a touch panel, and said input assistance means is a stylus.

7. A control method of an electronic apparatus, the electronic apparatus comprising:

an operation unit that receives a user operation, and
input assistance means used when a user inputs information to said operation unit,
said method comprising:

a step of detecting an operation performed by a user using said input assistance means; and
a step of guiding, in response to an operation performed by a user, a user operation to a prescribed operation by changing a sensory perception given to the user by said input assistance means.

8. The control method of an electronic apparatus according to claim 7, wherein said step of guiding to the prescribed operation comprises calculating a movement assistance line to guide a user operation, from a first operation point at which said operation unit receives a user operation and a second operation point at which the user is assumed to perform an operation next based on the first operation point, and in a case where the user operation deviates from the movement assistance line, strengthening a sensory perception given to the user by said input assistance means.

9. A program for a computer configured to control an electronic apparatus, the electronic apparatus comprising:

an operation unit that receives a user operation; and
input assistance means used when a user inputs information to said operation unit;
the program causing the computer to execute processing of:

a process of detecting an operation performed by a user, using said input assistance means; and
a process of guiding, in response to an operation performed by a user, a user operation to a prescribed operation by changing a sensory perception given to the user by said input assistance means.

10. The program according to claim 9, wherein said process of guiding to the prescribed operation comprises calculating a movement assistance line to guide a user operation, from a first operation point at which said operation unit receives a user operation and a second operation point at which the user is assumed to perform an operation next based on the first operation point, and in a case where the user operation deviates from the movement assistance line, strengthening a sensory perception given to the user by said input assistance means.

FIG. 1

**303**

CONTROL UNIT

OPERATION FEEDBACK

OPERATION DETECTION

**301**

OPERATION UNIT

**302:**
INPUT ASSISTANCE MEANS

**300: ELECTRONIC APPARATUS**

FIG. 2

FIG. 3

## FIG. 4

ELECTRONIC APPARATUS MAIN BODY    10

MAIN BODY COMMUNICATION UNIT    103

MAIN BODY CONTROL UNIT    104

DISPLAY UNIT    101

TOUCH PANEL    102

FIG. 5

20

STYLUS

201

STYLUS COMMUNICATION UNIT

204

STYLUS CONTROL UNIT

202

SPHERICAL BODY
CONTROL UNIT

203

**FIG. 6**

```
                    ┌─────────────┐
                    │    START    │
                    └──────┬──────┘
                           │            S01
                           ▼
              ┌────────────────────────┐
              │ DETECT INPUT BY STYLUS 20 │
              └────────────┬───────────┘
                           │            S02
                           ▼
         ┌──────────────────────────────────┐
         │ START COMMUNICATION BETWEEN       │
         │ ELECTRONIC APPARATUS MAIN BODY 10 │
         │ AND STYLUS 20                     │
         └────────────────┬─────────────────┘
                          │             S03
                          ▼
              ┌────────────────────────┐
              │ CALCULATE OPERATION POINT │
              └────────────┬───────────┘
                           │            S04
                           ▼
                   ◇ OPERATION POINT EXISTS? ◇────N──┐
                           │                          │
                           Y            S05           │
                           ▼                          │
              ┌──────────────────────────┐            │
              │ CREATE MOVEMENT ASSISTANCE LINE │       │
              └────────────┬─────────────┘            │
                           │                          │
                           ▼            S06            │
                   ◇ ON MOVEMENT ASSISTANCE LINE? ◇──N──┐
                           │                            │
                           Y     S07         S08        │
                           ▼                  ▼         │
              ┌──────────────────┐  ┌──────────────────┐
              │ INCREASE FRICTIONAL │ │ LOWER FRICTIONAL │
              │ RESISTANCE         │ │ RESISTANCE        │
              └─────────┬────────┘  └────────┬─────────┘
                        │                    │
                        ▼            S09      │
              N──◇ HAS OPERATION POINT BEEN REACHED? ◇
                        │
                        Y
                        ▼
                  ┌──────────┐
                  │   END    │
                  └──────────┘
```

- S01 DETECT INPUT BY STYLUS 20
- S02 START COMMUNICATION BETWEEN ELECTRONIC APPARATUS MAIN BODY 10 AND STYLUS 20
- S03 CALCULATE OPERATION POINT
- S04 OPERATION POINT EXISTS?
- S05 CREATE MOVEMENT ASSISTANCE LINE
- S06 ON MOVEMENT ASSISTANCE LINE?
- S07 INCREASE FRICTIONAL RESISTANCE
- S08 LOWER FRICTIONAL RESISTANCE
- S09 HAS OPERATION POINT BEEN REACHED?

FIG. 7A

B(X2, Y2)

MOVEMENT ASSISTANCE LINE

L

θ

A(X1 , Y1)

## FIG. 8

STYLUS — 20a

STYLUS COMMUNICATION UNIT — 201

STYLUS CONTROL UNIT — 204

VIBRATION UNIT — 205

203

| INTERNATIONAL SEARCH REPORT | International application No. |
|---|---|
| | PCT/JP2012/063463 |

**A. CLASSIFICATION OF SUBJECT MATTER**
*G06F3/01*(2006.01)i, *G06F3/033*(2006.01)i, *G06F3/048*(2006.01)i

According to International Patent Classification (IPC) or to both national classification and IPC

**B. FIELDS SEARCHED**

Minimum documentation searched (classification system followed by classification symbols)
G06F3/01, G06F3/033, G06F3/048

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2005-317006 A (Fuji Xerox Co., Ltd.),<br>10 November 2005 (10.11.2005),<br>claims; paragraphs [0058] to [0073]; all drawings<br>& US 2005/0243072 A1 | 1,3-7,9<br>2,8,10 |
| Y | JP 2007-302213 A (Toyota Motor Corp.),<br>22 November 2007 (22.11.2007),<br>paragraphs [0044] to [0049]; fig. 9, 10<br>(Family: none) | 2,8,10 |
| Y | JP 2003-97964 A (Nissan Motor Co., Ltd.),<br>03 April 2003 (03.04.2003),<br>paragraphs [0038] to [0046]; fig. 4<br>(Family: none) | 2,8,10 |

☒ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>   13 August, 2012 (13.08.12) | Date of mailing of the international search report<br>   21 August, 2012 (21.08.12) |
| Name and mailing address of the ISA/<br>   Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2012/063463

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2004-171157 A  (Fuji Xerox Co., Ltd.),<br>17 June 2004 (17.06.2004),<br>paragraphs [0053] to [0055]; fig. 8<br>& US 2004/0095369 A1    & KR 10-2004-0044075 A<br>& CN 1501217 A | 1-10 |
| A | JP 6-83540 A  (PFU Ltd.),<br>25 March 1994 (25.03.1994),<br>entire text; all drawings<br>(Family: none) | 1-10 |
| A | JP 5-35398 A  (Toshiba Corp.),<br>12 February 1993 (12.02.1993),<br>entire text; all drawings<br>(Family: none) | 1-10 |
| A | JP 2004-246451 A  (Matsushita Electric<br>Industrial Co., Ltd.),<br>02 September 2004 (02.09.2004),<br>entire text; all drawings<br>(Family: none) | 1-10 |
| A | JP 2009-75995 A  (Hitachi, Ltd.),<br>09 April 2009 (09.04.2009),<br>entire text; all drawings<br>(Family: none) | 1-10 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011118733 A
- JP 2008257748 A
- JP 2005317006 A